# EUROPEAN PATENT APPLICATION

(11) **EP 4 642 067 A1**
(43) Date of publication of application: **29.10.2025**
(21) Application number: 23907808.2
(22) Date of filing: 21.12.2023
(51) Int. Cl.: H04W 12/04, H04W 12/08, H04W 84/12, H04W 12/0431, H04W 12/041, H04W 12/03

(54) **METHOD AND DEVICE FOR SHARING SECURITY KEY ON BASIS OF MULTI-ACCESS POINT OPERATION IN WIRELESS LAN SYSTEM**

(30) Priority: 21.12.2022 KR 20220180843; 06.01.2023 KR 20230002414
(71) Applicant: LG Electronics Inc., Yeongdeungpo-gu Seoul 07336 (KR)
(72) Inventor: BAEK, Sunhee, Seoul 06772 (KR); CHUN, Jinyoung, Seoul 06772 (KR); CHOI, Jinsoo, Seoul 06772 (KR); JANG, Insun, Seoul 06772 (KR)
(74) Representative: Frenkel, Matthias Alexander
(86) International application number: PCT/KR2023/021258
(87) International publication number: WO 2024/136525

(57) **Abstract**

A method and a device for sharing a security key on the basis of a multi-access point (AP) operation in a wireless LAN system are disclosed. The method performed by means of a first station (STA) in a wireless LAN system, according to one embodiment of the present disclosure, may comprise steps in which: the first STA generates a multi-access point group temporal key (MAGTK); and the MAGTK encrypted on the basis of a key shared between the first STA and one or more second STAs is transmitted to the one or more second STAs. The security key for a third STA is encrypted on the basis of the MAGTK, and can be shared with the first STA and the one or more second STAs.

## Description

### [TECHNICAL FIELD]

The present disclosure relates to a method and a device for sharing a security key based on a multi-access point (AP) operation in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a method and a device for sharing a security key based on a multi-AP operation in a WLAN system.

An additional technical problem of the present disclosure is to provide a method and a device for increasing the speed and efficiency of movement of a STA between multiple APs based on a security key shared within a multi-AP set in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a WLAN system according to an aspect of the present disclosure may include generating a multi-access point group temporal key (MAGTK) by the first STA; and transmitting a MAGTK encrypted based on a key shared between the first STA and at least one second STA to the at least one second STA. A security key for a third STA may be encrypted based on the MAGTK and shared with the first STA and the at least one second STA.

A method performed by a second station (STA) in a WLAN system according to an additional aspect of the present disclosure may include obtaining a key shared between a first STA and at least one second STA including the second STA; and receiving, from the first STA, a multi-access point group temporal key (MAGTK) encrypted based on a key shared between the first STA and at least one second STA. The MAGTK may be generated by the first STA, and a security key for a third STA may be encrypted based on the MAGTK and shared with the first STA and the at least one second STA.

### [Technical Effects]

According to the present disclosure, a method and a device for sharing a security key based on a multi-AP operation in a WLAN system may be provided.

According to the present disclosure, a method and a device for increasing the speed and efficiency of movement of a STA between multiple APs based on a security key shared within a multi-AP set in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied
FIG. 9 is a diagram for describing a 4-way handshaking procedure to which the present disclosure may be applied.
FIG. 10 is a diagram for describing a BSS transition in the existing WLAN system.
FIG. 11 is a diagram for describing the operation of the first STA according to the present disclosure.
FIG. 12 is a diagram for describing the operation of the second STA according to the present disclosure.
FIG. 13 is a diagram showing examples of a security key sharing scope according to the present disclosure.
FIG. 14 is a diagram for describing an example of a MAGTK shared within a MAP according to the present disclosure.
FIG. 15 is a diagram showing examples of an element in which a MAGTK is included according to the present disclosure.
FIG. 16 is a diagram showing an example of a security key sharing operation according to the present disclosure.
FIG. 17 is a diagram showing another example of a security key sharing operation according to the present disclosure.
FIG. 18 is a diagram showing another example of a security key sharing operation according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

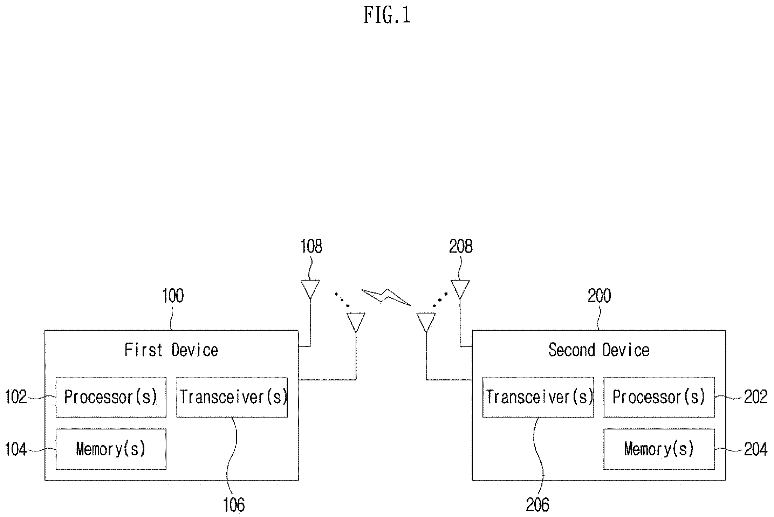

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

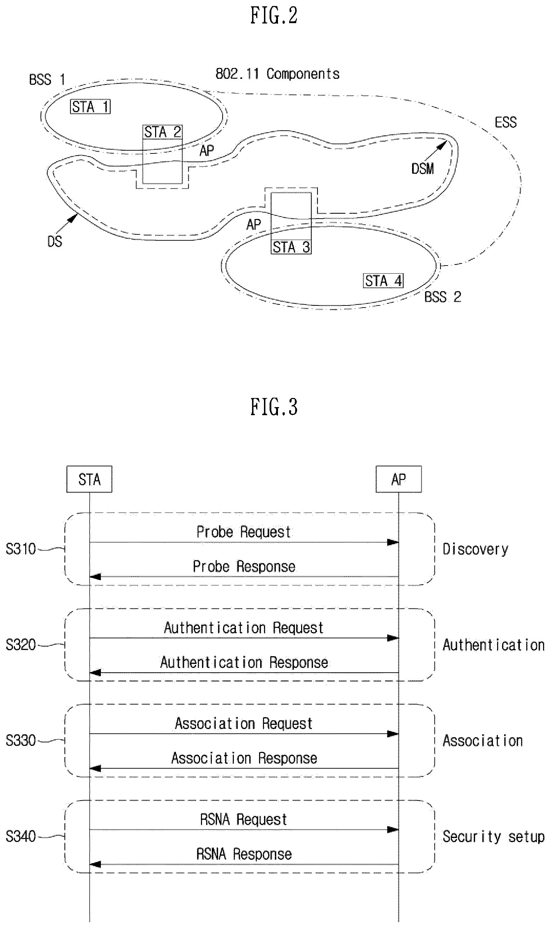

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

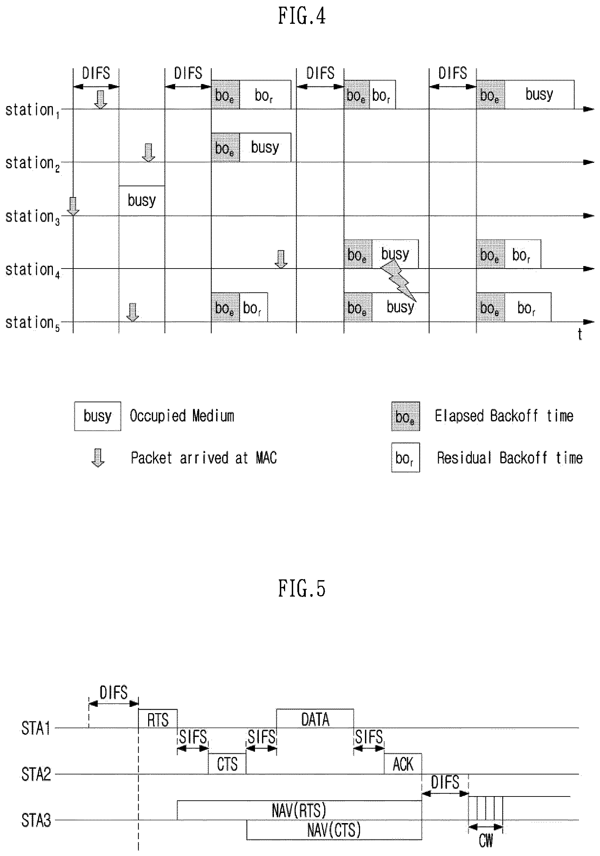

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back- off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

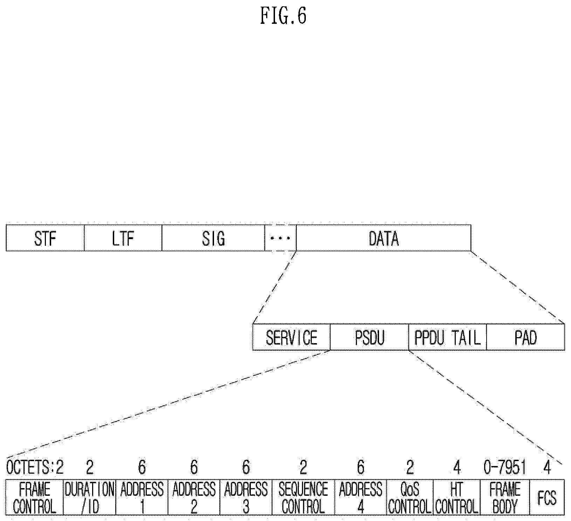

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

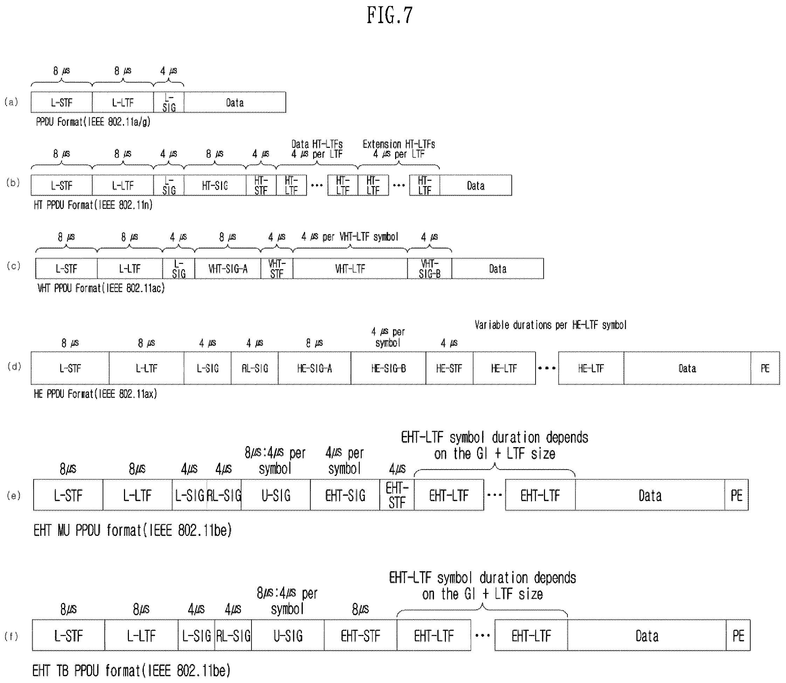

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

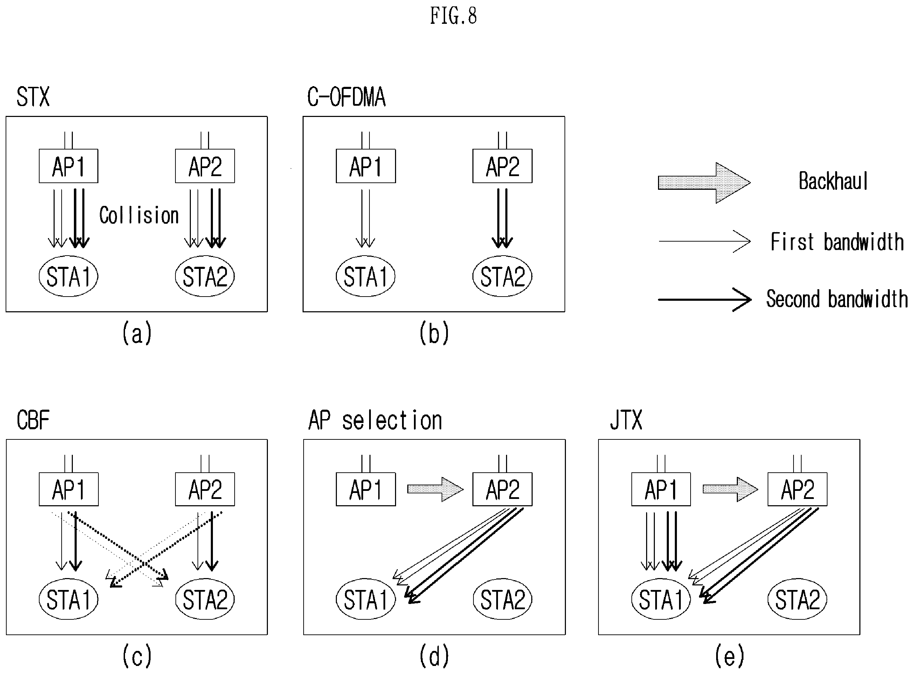

FIG. 8 is a diagram for describing various transmission or reception techniques in a MAP environment to which the present disclosure may be applied.

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 8(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

### RSN Operation

As described by referring to FIG. 3, an authentication process after a discovery process between a STA and an AP may be performed in an open system manner, and an association process may be performed. This process may be referred to as step 0 for searching for whether to support a robust security network (RSN) and establishing authentication and association.

When step 0 is successfully completed, step 1 for securing a pairwise master key (PMK) and user authentication by IEEE 802.1X/EAP (extensible authentication protocol) or a pre-shared key (PSK) may be performed. A mutual authentication method applied here may include 802.1X/EAP, PSK or SAE (simultaneous authentication of equals), etc. For example, for a 802.1X/EAP authentication method, a PMK may be generated from a master session key (MSK) after authentication between a STA and a remote authentication dial-in user service (RADIUS). For a user authentication method by a PSK, an AP and a STA may directly set a PMK in the same way as a PSK. For a user authentication by SAE, an AP and a STA may directly set a PMK by using the operation value of mutual authentication and authentication process through a SAE authentication process.

Following step 1, step 2 for confirming whether the other party has the same PMK by using an EAPoL-Key frame and generating and sharing an encryption key may be performed. Step 2 may include the process of mutually confirming PMK generation through 4-way handshaking and generating and delivering a group key (e.g., a group temporal key (GTK)). A pairwise transient key (PTK), a key confirmation key (KCK), a key encryption key (KEK), and a temporal key (TK) may be generated through 4-way handshaking.

Specifically, a PMK may be generated from a MSK in step 1, and a PTK may be generated from a PMK in step 2. Here, a PTK is set separately as a KCK, a KEK and a TK. A GTK may be generated from an AP and delivered to a STA. When an AP wants to generate a new GTK, it may perform handshaking with a STA and deliver a new GTK to a STA.

In order to confirm whether a STA and an AP have the same PMK, for 802.1X/EAP, the same MSK is set between a STA and an authentication server (AS) by a user authentication result between a STA and an AS, and an AS delivers a corresponding MSK to an AP. A STA and an AP may mutually confirm whether to have a PMK, a symmetric key generated from a MSK, through 4-way handshaking. For a PSK, an authentication procedure may be replaced by mutually verifying whether a PMK generated from a PSK set in advance between an AP and a STA is secured through 4-way handshaking. For SAE, a PMK set in advance between an AP and a STA may be mutually verified through 4-way handshaking.

It may also be confirmed whether a STA and an AP have the same PMK by mutually verifying that the same PTK was generated. For example, it may also be confirmed whether a PMK is secured through message 2 and message 3 of 4-way handshaking. Specifically, in message 2, a STA may transmit the KCK of a PTK it generated to an AP by including it in a key MIC field. In message 3, an AP may transmit the KCK of a PTK it generated to a STA by including it in a key MIC field. Through this, a STA (an AP) may verify that an AP (a STA) generated the same PTK as its PTK and confirm that an AP (a STA) has the same PMK as its PMK. Meanwhile, in message 1, the value of a key MIC field may be set as 0, and in message 4, a KCK value may be included in a key MIC field.

In this way, a security key for encrypting data to be transmitted and received between a STA and an AP may be generated in step 2. In a RSN, a different security key is generated for each STA associated with an AP, and another security key is generated when a STA is re-associated with another AP.

Based on a TK generated as a result of 4-way handshaking in step 2, data encryption may be performed by using a temporal key integrity protocol (TKIP), a cipher-block chaining message authentication code protocol (CCMP), a Galois/Counter Mode protocol (GCMP), etc., which may be referred to as step 3.

The above-described MSK, PSK, PMK, PTK, KCK, KEK and TK correspond to a pairwise key, i.e., a pairing key between an AP and a STA. Unlike a pairwise key, a group key may be generated based on a group master key (GMK) so that an AP generates a security key for a group-addressed frame, such as a beacon frame. A GMK is randomly set by an AP. A group temporal key (GTK) is generated from a GMK by a pseudorandom function (PRF) function, and corresponds to a unidirectional group key from an AP to a STA.

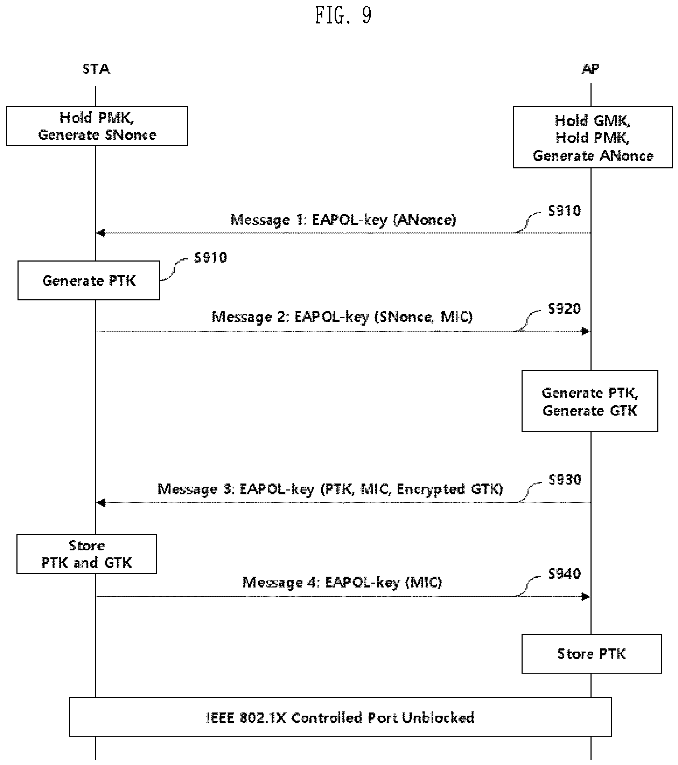

FIG. 9 is a diagram for describing a 4-way handshaking procedure to which the present disclosure may be applied.

A STA corresponds to a supplicant, and an AP corresponds to an authenticator. 4-way handshaking may be performed to generate and confirm a PTK and a GTK between an AP and a STA when a STA has or knows a PMK and an AP has or knows a PMK and a GMK.

ANonce and SNonce correspond to a factor used in a PRF function used to generate a PTK. ANonce may correspond to a random number generated by an access point (i.e., an authenticator). SNonce may correspond to a random number generated by a STA (i.e., a supplicant). A PRF function may correspond to a function that generates a PTK based on, for example, a PMK, ANonce, SNonce, the MAC address of a supplicant and the MAC address of an authenticator.

Message 1 in S910 is transmitted from an AP to a STA in a unicast manner, and an EAPOL-key frame may include ANonce information. When an AP generates a PMK, PMKID may be included in the key data field of an EAPOL-key frame. A STA may generate a PTK based on information received from an AP and may generate a KCK, a KEK and a TK based on a PKT.

Message 2 in S920 is transmitted from a STA to an AP in a unicast manner, and an EAPOL-key frame may include SNonce information and a key message integrity code (MIC). For example, the key MIC of message 2 may have a value based on a KCK generated by a STA. An AP may generate a PTK based on information received from a STA and may generate a KCK, a KEK and a TK based on a PTK. An AP may verify whether an AP and a STA generated the same PTK based on whether the KCK value of a PTK generated based on a value included in message 2 and a KCK value related to a key MIC value included in message 2 are the same. In addition, an AP may generate a GTK, if necessary. A GTK may be generated by an AP from a GMK without the participation of a STA.

Message 3 in S930 is transmitted from an AP to a STA in a unicast manner, and an EAPOL-key frame may include a PTK, a MIC and encrypted GTK information. The encrypted GTK of message 3 may be generated based on a KEK generated by an AP and may be included in a key data field. A STA may store a PTK in PKT-SA (PKT-Security Association) and a GTK in GTK-SA.

Message 4 in S940 is transmitted from a STA to an AP in a unicast manner, and an EAPOL-key frame may include MIC information. When verification is completed through MIC, an AP may store a PTK in PKT-SA and a GTK in GTK-SA.

When 4-way handshaking is successfully completed in this way, a virtual control port that blocks all traffic may be unblocked and encrypted traffic may be transmitted and received. Afterwards, all unicast traffic may be encrypted by a PTK, and all multicast/broadcast traffic may be encrypted by a GTK.

### A fast BSS transition (FT) operation

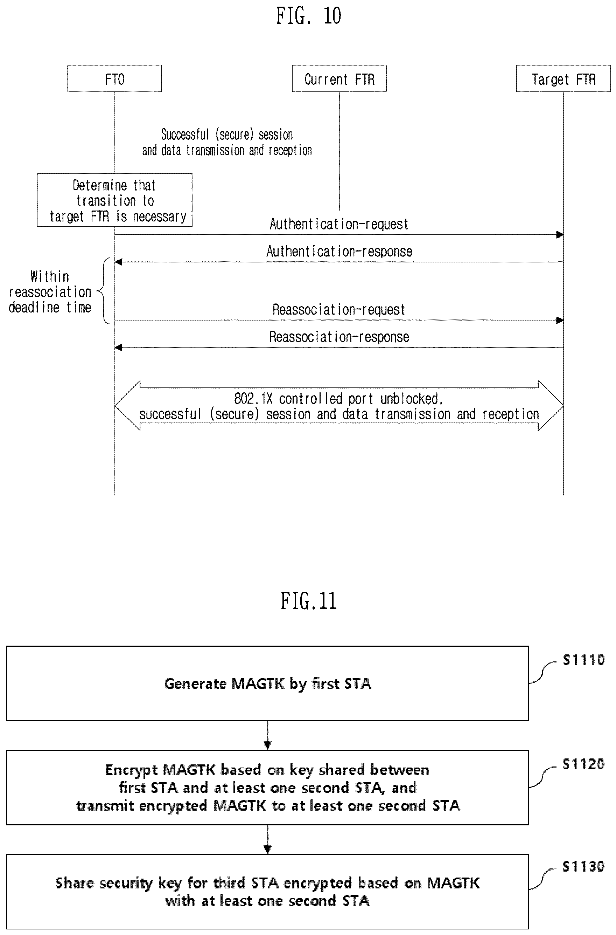

FIG. 10 is a diagram for describing a BSS transition in the existing WLAN system.

For a fast BSS transition (FT) method corresponding to the typical example of a BSS transition (or roaming), various processes such as an authentication request/response, a re-association request/response, etc. are required between a FT originator (FTO) (or a non-AP STA) and a target FTR in order to move from a current FT responder (FTR) (or a current AP) to a target FTR (or a target AP). In other words, in the existing BSS transition method, a re-association process is required on the same mobility domain.

In addition, after a process illustrated in FIG. 10, various operation parameters such as an agreement related to BlockAck (BA) or Service Classification Service (SCS), etc., a SN, an EDCA function (EDCAF) parameter, etc. are reset. Accordingly, a FTO must perform a variety of and a large number of frame exchanges for FT and must perform an agreement/a configuration with a new FTR again. Accordingly, the complexity and overhead of a FT process are high and data loss may occur during a FT process.

In the existing authentication method, a STA that determines that roaming to a new AP is necessary must exchange a (re-)association request/response with a new AP, and may obtain a MSK after successfully completing a STA's authentication for a new AP. In other words, a STA must newly start RSN authentication and key generation processes described by referring to FIG. 9 from the beginning with a new AP.

In a FT method to refine this, obtaining a MSK during an authentication process may be completed before a STA performs roaming. For example, when a STA enters a mobility domain (MD), an initial authentication procedure is performed only once, and an encryption method derived from an initial authentication procedure is used within the same MD (i.e., entities having the same MD identification information (MDID)), so roaming time may be shortened and the load of an authentication server (AS) may be reduced.

In addition, a FT key hierarchy may be supported to support a FT method. The highest level of key holder (KH) may correspond to R1KH and S1KH, and a low level of key holder may correspond to ROKH and SOKH. R1KH and S1KH may have the access right to ROKH and SOKH. ROKH and R1KH belong to the station management entity (SME) RSNA key management of an AP, and may be referred to as an authenticator key holder. SOKH and S1KH belong to the SME RSNA key management of a STA, and may be referred to as a supplicant key holder. ROKH and SOKH may be responsible for calculating PMK-R0 and PMK-R1 of an AP and a STA, respectively. R1KH and S1KH may be responsible for calculating PTK of an AP and a STA, respectively.

When authentication is successfully performed in a FT initial mobility domain association method, ROKH of an AP (e.g., a current FTR) may receive a PMK and related parameters. Here, when a KH belonging to the same MDID as a STA to be associated already exists, PMK-R0 security association (SA) and PMK-R1 SA where ROKH exists may be deleted, and PMK-R0 and PMK-R1 may be calculated based on a newly received PMK. Afterwards, S1KH of a STA and R1KH of an AP may generate a TK and a GTK through 4-way handshaking and store and manage them in each SA (e.g., PTKSA, GTKSA). Accordingly, an IEEE 802.1X controlled port between a STA and an AP may be unblocked and an encrypted message may be transmitted and received.

### Multi-AP Operation-Based Security Key Sharing

As described above, after an association between an AP and a STA is established, an encryption key (e.g., a TK derived from a PTK) used in data encapsulation/de-encapsulation is generated through 4-way handshaking. The security parameters in this process may be stored in a PTK security association (SA) within an AP and a STA. The corresponding information may be reused when a STA moves/roams from an associated AP to another AP and an encryption key (e.g., a TK) may be regenerated. This process may be applied, for example, in a FT method.

A multi-AP (MAP) may be configured by including one master AP (or sharing AP) and at least one slave AP (or shared AP). In a MAP environment, it may be assumed that a STA performs FT to establish re-association with another AP in a MAP after performing 4-way handshaking for initial association with an AP belonging to a MAP (or a MAP set) through a current existing authentication method. In this case, a STA must generate a different encryption key for each AP connected to communicate with different APs. In these processes, a STA performs multiple communications with APs in one MAP set, which may cause delay and hinder efficient transmission and reception of data in a MAP.

The present disclosure describes various examples in which a seamless security association is established between APs belonging to a MAP and a STA.

In the present disclosure, in a MAP environment, a STA may generate a security key for data transmission and reception through an initial association with a master AP or a slave AP. One AP within a MAP that established an initial association with a STA may share a corresponding key with AP(s) within the same MAP to reduce delay and inefficiency due to STA movement/roaming as described above. For example, although a STA moves between APs within one MAP, it may continuously transmit and receive data with a new AP without additional authentication and re-association procedures.

Hereinafter, specific examples of a security key sharing method based on a multi-AP operation are described. The names and values of a field, an element, a parameter, a key, etc. proposed in the present disclosure are exemplary and are not limited to those names and values. In addition, unless otherwise specified, a STA may be an AP STA or a non-AP STA.

FIG. 11 is a diagram for describing the operation of the first STA according to the present disclosure.

In an example of FIG. 11, the first STA may correspond to the master/sharing AP of a MAP, the second STA may correspond to the slave/shared AP of a MAP and the third STA may correspond to a non-AP STA that establishes an initial association with the first STA or the second STA.

In S1110, the first STA may generate a multi-access point group temporal key (MAGTK).

A MAGTK may correspond to a group temporary key commonly used in a MAP. In generating a MAGTK, for example, the first GMK, MAP group key expansion and the MAC address of the first STA may be used, and other additional factors may be further used. Here, the first GMK is a GMK used to generate a MAGTK, and the second GMK used by the first STA to generate a GTK may have the same value or may be defined separately and have a different value.

In S1120, the first STA may encrypt a MAGTK based on a key shared between the first STA and at least one second STA. An encrypted MAGTK may be transmitted to at least one second STA.

For example, a key shared between the first STA and at least one second STA may be a KEK or a PSK. Based on this shared key, an element/a frame including a MAGTK may be encrypted. Alternatively, based on this shared key, a MAGTK itself may be encrypted and included in an element/a frame (not encrypted by a MAGTK).

For example, an element including a MAGTK may be a MAGTK key data element (KDE). A MAGTK KDE may include key identification information, MDID and MAGTK. Additionally, a MAGTK KDE may further include a MAP group cipher suite. MDID included in a MAGTK KDE may be replaced with MAP identification information.

For example, an element including a MAGTK may be a predetermined element having a different format from a MAGTK KDE. A predetermined element may include key information (including key identification information), key length information, MDID and MAGTK. Additionally, a predetermined element may further include a MAP group cipher suite. MDID included in a predetermined element may be replaced with MAP identification information.

In S1130, a security key for the third STA may be encrypted based on a MAGTK and shared with at least one second STA. Accordingly, in sharing a security key for the third STA within a MAP, a security key for the third STA may be prevented from being exposed to other STAs other than a MAP.

A security key for the third STA may be a pairwise temporal key (PTK) generated equally between the first STA or the second STA that establishes an initial association with the third STA and the third STA or the temporal key (TK) of the PTK.

A PTK/a TK for the third STA corresponds to a security key applied to the encryption of unicast traffic to/from the third STA after completion of a security authentication procedure. As a PTK/a TK for the third STA is shared within a MAP, other STAs that do not establish an initial association with the third STA may also use a PTK/a TK to encrypt and transmit and receive unicast traffic to/from the third STA.

The third STA and other second STAs or first STAs that establish an initial association with the third STA may generate a PTK/a TK for the third STA. For example, in generating a PTK for the third STA, for example, a MAP-PTK, the MAC address of the third STA and the MAC address of a MAP may be used, and other additional factors may be further used. A TK may be derived from a PTK (for example, a TK is configured by extracting bits of a part of a PTK). Here, the MAC address of a MAP may be the MAC address of the first STA, or a MAC address common to the first STA and the at least one second STA (e.g., defined for a MAP). The MAC address of a MAP may be indicated by BSSID.

A PTK/a TK for the third STA may be encrypted by using a temporal key (TK) derived from a MAGTK. In addition, in encrypting a PTK/a TK based on a MAGTK, information of the third STA may also be encrypted based on a MAGTK and shared with at least one second STA together with an encrypted PTK/TK for the third STA. Additionally or alternatively, in encrypting a PTK/a TK based on a MAGTK, a cipher suite agreed between STAs that establish an initial association with the third STA (e.g., other second STAs or first STAs) may also be encrypted based on a MAGTK and shared with at least one second STA together with an encrypted PTK/TK for the third STA.

As an example of PTK/TK sharing, another second STA (i.e., the second STA other than at least one second STA with which a PTK/a TK is shared) that establishes an initial association with the third STA may encrypt a PTK/a TK for the third STA and transmit it to the first STA. The first STA may decrypt an encrypted PTK/TK to obtain a PTK/a TK, and may encrypt an obtained PTK/TK to transmit (e.g., broadcast or multicast) it to at least one second STA. Alternatively, the first STA may transmit an encrypted PTK/TK as it is to at least one second STA.

As another example of PTK/TK sharing, another second STA (i.e., the second STA other than at least one second STA with which a PTK/a TK is shared) that establishes an initial association with the third STA may encrypt a PTK/a TK for the third STA and transmit it to the first STA and also to at least one second STA.

As another example of PTK/TK sharing, the first STA that establishes an initial association with the third STA may encrypt a PTK/a TK for the third STA and transmit it to at least one second STA.

A method described in an example of FIG. 11 may be performed by the first device 100 in FIG. 1. For example, at least one processor 102 of the first device 100 in FIG. 1 may be configured to generate a MAGTK and transmit a MAGTK encrypted based on a key shared between the first STA and at least one second STA to at least one second STA. Accordingly, a security key for the third STA may be encrypted based on a MAGTK and shared with at least one second STA. Furthermore, at least one memory 104 of the first device 100 may store instructions for performing a method described in an example of FIG. 11 or examples described below when executed by at least one processor 102.

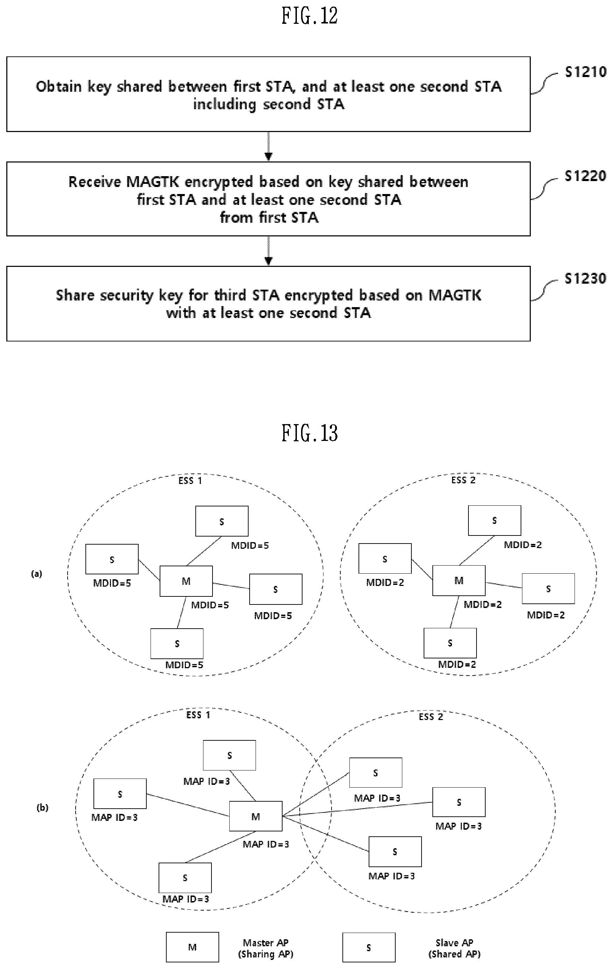

FIG. 12 is a diagram for describing the operation of the second STA according to the present disclosure.

In S1210, the second STA may obtain a key shared between at least one second STA including itself and the first STA.

The specific description of a key shared between the first STA and at least one second STA is the same as the description of an example in FIG. 11, so an overlapping description is omitted.

In S1220, the second STA may receive a MAGTK encrypted based on a key shared between the first STA and at least one second STA from the first STA.

The specific description of a MAGTK, encryption for a MAGTK and transmission/reception of an encrypted MAGTK is the same as the description of an example in FIG. 11, so an overlapping description is omitted.

In S1130, a security key for the third STA may be encrypted based on a MAGTK and shared with at least one second STA.

The specific description of sharing a security key (e.g., a PTK/a TK) and an encrypted security key is the same as the description of an example in FIG. 11, so an overlapping description is omitted.

A method described in an example of FIG. 12 may be performed by the second device 200 in FIG. 1. For example, at least one processor 202 of the second device 200 in FIG. 1 may be configured to obtain a key shared between the first STA and at least one second STA including the second STA and receive a MAGTK encrypted based on a corresponding shared key from the first STA. A MAGTK may be generated by the first STA, and a security key for the third STA may be encrypted based on a MAGTK and shared with at least one second STA. Furthermore, at least one memory 204 of the second device 200 may store instructions for performing a method described in an example of FIG. 12 or examples described below when executed by at least one processor 202.

The examples of FIGS. 11 and 12 may correspond to some of the various examples of the present disclosure. Hereinafter, various examples of the present disclosure including the example of FIGS. 11 and 12 will be described in more detail.

In embodiments described below, sharing a security key within a MAP is described as a representative example, but embodiments described below may be applied equally to a set of STAs that are not limited to a MAP and fall into a different scope requiring security key sharing. In addition, in embodiments described below, security key names such as MAGTK, PTK, TK, etc. are described as a representative example, but embodiments described below may be applied equally to security keys under other names used for a corresponding function/role.

### Embodiment 1

This embodiment relates to definition, identification and initial authentication of a scope to which security key sharing may be applied (e.g., a set of APs that belong to one MAP and allow a STA's roaming).

FIG. 13 is a diagram showing examples of a security key sharing scope according to the present disclosure. In FIG. 13, M represents a master AP, and S represents a slave AP.

A scope to which a FT protocol described by referring to FIG. 10 is applied corresponds to STAs and APs belonging to the same mobility domain (MD) within the same ESS, and this scope may be identified by MDID.

As in an example of FIG. 13(a), a scope to which security key sharing within a MAP according to the present disclosure (which is distinguished from a FT operation) is applied may be identified by setting the same MDID for APs to which the security key sharing of the present disclosure is applied (e.g., master AP and slave AP(s) within one MAP). A MDID set for this purpose means the same MD within the same ESS, and furthermore, it may represent that the same MD corresponds to one MAP by being applied to a MAP.

As in an example of FIG. 13(b), when APs to which the security key sharing of the present disclosure is applied (e.g., master AP and slave AP(s) within one MAP) belong to a plurality of ESSs, a MDID limited to one ESS may not identify corresponding APs. Accordingly, a new ID (e.g., a MAP ID) distinct from a MDID may be defined and used to identify a scope to which the security key sharing of the present disclosure is applied.

For the example of FIG. 13(a), a MAP ID distinct from a MDID may also be used to identify a scope to which the security key sharing of the present disclosure is applied.

### Embodiment 2

This embodiment relates to a method for generating and sharing a security key after initial association and initial authentication between a STA and one of the APs belonging to a scope in which a security key may be shared (e.g., one MAP).

An initial authentication procedure performed before an initial association process between an AP belonging to a MAP and a STA may be performed similarly to that described by referring to a FT protocol in FIG. 10 and a process in FIG. 3. For example, when an authentication process after a discovery procedure is performed in an open system manner and an association process is successfully completed, authentication may be performed based on an IEEE 802.1X method. When this authentication is successfully completed, a STA and an AP may obtain a PMK from an IEEE 802.1X authentication server.

In the present disclosure, all other APs (i.e., master AP and/or slave AP(s)) belonging to the same MAP as an AP (e.g., a master AP or a slave AP) that performs an authentication procedure with a STA may also receive/obtain the same PMK from an IEEE 802.1X authentication server. Unlike examples described by referring to FIGS. 3 and 10, it means that a PMK is shared based on a MAP, and for this purpose, a security key sharing scope through the above-described MAP ID (or MDID) may be identified.

Next, in a MAP, a STA and an AP (e.g., a master AP or a slave AP) may generate a security key (e.g., a PTK) through an initial association process and a 4-way handshaking process and store or install the same (or pairwise) security key (PTK) in each of a STA and an AP. For example, an initial association process may be performed similarly to a FT initial (MD) association process, and a 4-way handshaking process may be performed similarly to a FT 4-way handshaking process.

In the present disclosure, an AP that generates and stores the same/pairwise security key (e.g., a PTK) as a STA may share the same/pairwise security key (e.g., a PTK) or another security key (e.g., a TK) derived from a corresponding security key with all other APs belonging to the same MAP (i.e., master AP and/or slave AP(s)). As a sharing method, a method may be applied that an AP that generates/stores the same/pairwise security key as a corresponding STA includes a corresponding security key (e.g., a PTK or a TK) in data/frame and transmits/announces it to other AP(s) (i.e., through a wireless medium).

For example, a corresponding security key (a PTK or a TK) may be included in a frame transmitted from one AP in a MAP to other APs, and a region in a frame in which a corresponding security key (a PTK or a TK) is included may be encrypted and transmitted by a key (e.g., a MAGTK) shared only between APs in a MAP. Other STAs and APs other than a MAP that do not know a corresponding MAGTK may not know whether a security key (a PTK or a TK) exists in a corresponding frame, and may also not decrypt the specific value of a security key (a PTK or a TK). Accordingly, the security of a corresponding security key (a PTK or a TK) may be maintained.

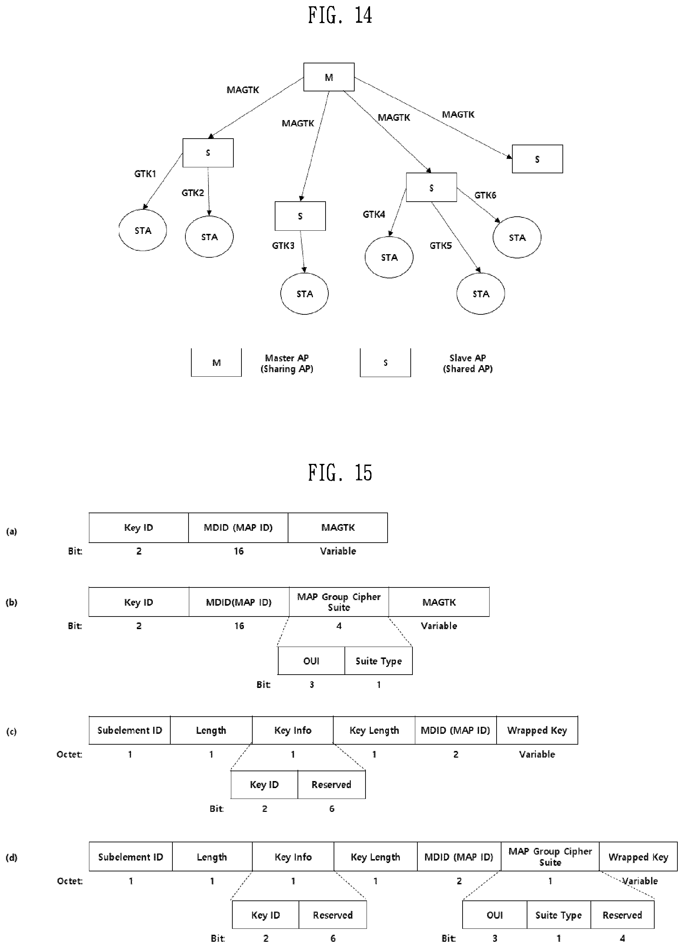

FIG. 14 is a diagram for describing an example of a MAGTK shared within a MAP according to the present disclosure.

A master AP and slave AP(s) belonging to the same one MAP may have/store the same MAGTK. A MAGTK may be generated by a master AP and transmitted to all slave AP(s) in a MAP. A MAGTK transmitted to each slave AP has the same value.

A GTK may also be transmitted to STAs associated with a slave AP belonging to a MAP. This GTK is distinguished from a MAGTK newly defined in the present disclosure. A GTK provided by a slave AP to a STA may be used for encrypting/decrypting broadcast traffic from an AP, and a GTK may be encrypted by a KEK (i.e., a key derived from a PTK) and transmitted to a STA through message 3 during a 4-way handshaking process with a STA. A GTK transmitted from a slave AP to STAs may be the same value or a different value. A GTK transmitted from a slave AP to a STA may be generated by a master AP. In addition, a GTK transmitted to a STA may be transmitted together through the same frame/message when sharing a MAGTK.

Hereinafter, specific examples of a MAGTK generation and sharing method shared only between APs in a MAP are described. A MAGTK may correspond to a GTK shared in a MAP or a GTK shared by a master AP.

### Embodiment 3

This embodiment relates to a method for sharing a MAGTK.

FIG. 15 is a diagram showing examples of an element in which a MAGTK is included according to the present disclosure.

If there is a process of individually establishing an association/a connection between a master AP and slave AP(s) in a MAP, a master AP may generate a MAGTK and transmit an EAPoL-key frame including a corresponding MAGTK to slave APs. A slave AP may store/install a received MAGTK and related information/parameters in a MAGTK-Security Association (MAGTK-SA).

A MAGTK and related information may be transmitted and received by being included in a key data element (e.g., a MAGTK KDE). The data type of KDE selectors of a MAGTK KDE may have a value that is distinct from other existing KDE types (e.g., one of 16-255 excluding 1-15 allocated to the existing data type).

FIG. 15(a) shows an example of a MAGTK KDE.

The value of a Key ID field may be set as a key ID that may identify a MAGTK. The value of a MDID field may indicate that it is a key transmitted to APs having a corresponding MDID. As described above, when a MAP ID is used, a MDID field in FIG. 15(a) may be replaced with a MAP ID field.

FIG. 15(b) shows another example of a MAGTK KDE.

Compared to an example of FIG. 15(a), a MAGTK KDE in FIG. 15(b) may further include a MAP group cipher suite. A MAP group cipher suite field may not be included in data including a MAGTK (e.g., a MAGTK KDE) when there is a cipher suite value that is used by APs within a MAP when performing transmission and reception, which is shared by APs within a MAP in advance. When a pre-shared cipher suite does not exist or when a pre-shared cipher suite is changed to another cipher suite, a MAP group cipher suite field may be transmitted together with a MAGTK.

A MAP group cipher suite field may include a suite selector format. A suite selector format may include an Organizationally Unique Identifier (OUI) and a suite type field. An OUI field may be set as a specific value (e.g., 00-0F-AC), and according to the combination of the value of an OUI field and the value of a suite type field, a cipher suite such as WEP-40, WEP-104, TKIP, CCMP-128, GCMP-128, BIP-CMAC-128, BIP-GMAC-128, etc. may be indicated. For example, a WEP-40 or WEP-104 cipher suite is used for a GTK, but may not be used for a PTK, an integrity group temporal key (IGTK) or a beacon integrity group temporal key security association (BIGTK). A CCMP-128 or GCMP-128 cipher suite is used for a GTK and a PTK, but may not be used for an IGTK or a BIGTK. A BIP-CMAC-128 or BIP-GMAC-128 cipher suite is not used for a GTK and a PTK, but may be used for an IGTK or a BIGTK.

A master AP may generate a MAGTK and configure a MAGTK KDE including a corresponding MAGTK. A master AP may share a MAGTK and related information by transmitting an EAPoL-key frame including a MAGTK to slave APs. Here, a master AP may encrypt and transmit the MAGTK KDE (or MAGTK and related information) of an EAPoL-key frame by using an encryption key agreed between a master AP and a slave AP. A slave AP may decrypt a received MAGTK KDE (or MAGTK and related information) by using the same agreed encryption key and store/install a MAGTK and related parameters in a MAGTK-SA.

If a process of individually establishing an association/a connection between a master AP and slave AP(s) in a MAP does not exist, a master AP may transmit a generated MAGTK to slave AP(s) through an individually addressed or group addressed frame/element. For example, a MAGTK may be transmitted by being included in a sub-element for a MAGTK (hereinafter, referred to as a MAGTK sub-element). A slave AP may store/install a received MAGTK and related information/parameters in a MAGTK-SA.

For example, a MAGTK sub-element may be included in an optional parameter within a FT element (FTE). It is just an example, and a MAGTK sub-element may be included in other existing elements/frames or a newly defined element/frame.

FIG. 15(c) shows an example of a MAGTK sub-element.

A sub-element ID that identifies a MAGTK sub-element may have a value distinct from the existing sub-element (e.g., one of 8-255 excluding 1-7 allocated as the existing sub-element ID). A length field may be set as a value representing the length of fields following a length field. A key information field includes a Key ID sub-field, and the value of a Key ID field may be set as a key ID that may identify a MAGTK. A key length field may be set as a value corresponding to the length of a transmitted MAGTK or the length of an encrypted key. The value of a MDID field may indicate that it is a key transmitted to APs having a corresponding MDID. As described above, when a MAP ID is used, a MDID field in FIG. 15(c) may be replaced with a MAP ID field. A wrapped key field may include an encrypted key, i.e., a result of applying encryption to a MAGTK.

FIG. 15(d) shows another example of a MAGTK sub-element.

Compared to an example of FIG. 15(c), a MAGTK sub-element in FIG. 15(d) may further include a MAP group cipher suite. A MAP group cipher suite field may not be included in data including a MAGTK (e.g., a MAGTK KDE) when there is a cipher suite value that is used by APs within a MAP when performing transmission and reception, which is shared by APs within a MAP in advance. When a pre-shared cipher suite does not exist or when a pre-shared cipher suite is changed to another cipher suite, a MAP group cipher suite field may be transmitted together with a MAGTK.

A MAGTK KDE, a MAGTK sub-element or an element/a frame including a MAGTK and related parameters as described above may be transmitted by a master AP to update a MAGTK previously shared between a master AP and slave APs to a new MAGTK. A slave AP that receives a MAGTK sub-element may delete a MAGTK and related parameters stored in the existing MAGTK-SA and newly store newly received MAGTK and related parameters.

A MAGTK (or a MAGTK and related information) may be encrypted and transmitted. Accordingly, a MAGTK may be protected from other STAs other than APs in a MAP. Encrypting a MAGTK (or a MAGTK and related information) may include encrypting a MAGTK (or a MAGTK and related information) itself, and/or encrypting a container (e.g., a MAGTK KDE or a MAGTK sub-element such as an example of FIG. 15) including a MAGTK (or a MAGTK and related information).

For example, when a security key (e.g., a PTK) is generated for unicast transmission between a master AP and a slave AP, a KEK derived from a PTK (or generated during a PTK generation process) may be used to encrypt a MAGTK (or a MAGTK and related information). When there is no security key for unicast transmission between a master AP and a slave AP, a master AP and a slave AP may share a PSK (e.g., a combination of various characters) in advance and encrypt a MAGTK (or a MAGTK and related information) by using a PSK or a key derived from a PSK (or reprocessed based on a PSK).

Alternatively, regardless of whether there is a security key for unicast transmission between a master AP and a slave AP, a part including a MAGTK (or a MAGTK and related information) in a container including a MAGTK (or a MAGTK and related information) may be restricted from recognizing other APs/STAs other than an AP (e.g., a master AP/a slave AP in a MAP).

A MAGTK-SA installed between a master AP and a slave AP may include not only a MAGTK but also parameter(s) related to a MAGTK. For example, a parameter related to a MAGTK may include at least one of the following parameters.
- Direction Vector: Parameter representing whether it is a transmitted MAGTK or a received MAGTK
- Group Cipher Suite Selector: Parameter indicating a method for encrypting data transmitted and decrypting data received by a security key based on a MAGTK between APs
- Authenticator MAC Address: For a MAGTK, the MAC address of a master AP (or a MAC address commonly used in a MAP)
- Key ID: ID identifying a MAGTK
- All authorization related parameters specified by local settings: For example, the authorized SSID of a STA, etc.

### Embodiment 4

This embodiment relates to a MAGTK generation method and a PTK generation method defined in the present disclosure.

A MAGTK may be generated by a master AP according to the following equation.

MAGTK=PRF_Length(GMK,"Multi-AP group key expansion",AA∥GNonce)
PRF_Length() means a function that derives the pseudo-random number of a specific length.

A GMK is a temporary key set by a master AP, and the same key as a GMK for generating a GTK generated by a master AP (i.e., a GTK distinct from a MAGTK) may be used to generate a MAGTK, or a key different from a GMK used to generate a GTK may be used to generate a MAGTK.

A label, which is a string identifying the purpose of a key generated by a PRF function, may be designated as "Multi-AP group key expansion" (or "Master AP group key expansion") corresponding to a MAGTK in examples described above.

AA corresponds to the value of the MAC address of a master AP (or a MAC address commonly used in a MAP).

GNonce(Group nonce) is a random number generated by an IEEE 802.1X authenticator (e.g., a master AP).

An AP belonging to a MAP and a STA associated with a corresponding AP may generate a PTK according to the following equation.

PTK=KDF_Hash_Length(PMK-R1,"MAP-PTK",SNonce∥ANonce∥BSSID∥STA-ADDR)
KDF_Hash_Length() means a key derivation function that generates the key of a specific length by using a specific hash algorithm.

PMK-R1 corresponds to the second-level key in a FT key hierarchy, and may be mutually derived by SOKH and ROKH.

A label, which is a string identifying the purpose of a key generated by a PRF function, may be designated as "MAP-PTK", which corresponds to a PTK (i.e., a PTK encrypted by a MAGTK and shared among APs in a MAP) in examples described above.

SNonce may correspond to a random number generated by a STA (i.e., a supplicant).

ANonce may correspond to a random number generated by a master AP or a slave AP (i.e., an authenticator) that is initially associated with a STA.

A BSSID may correspond to the BSSID of a master AP, the MAC address of a master AP or a MAC address value commonly used in a MAP.

STA-ADDR corresponds to the MAC address of a STA.

### Embodiment 5

This embodiment relates to a method in which APs within a MAP share a PTK/a TK.

As described above, when a STA establishes an initial association with an AP (a master AP or a slave AP) within a MAP, a STA and a corresponding AP may generate a security key (e.g., a PTK or a TK) in the same way. A corresponding security key (PTK/TK) may be shared with other APs within a MAP (master AP and/or slave AP(s)).

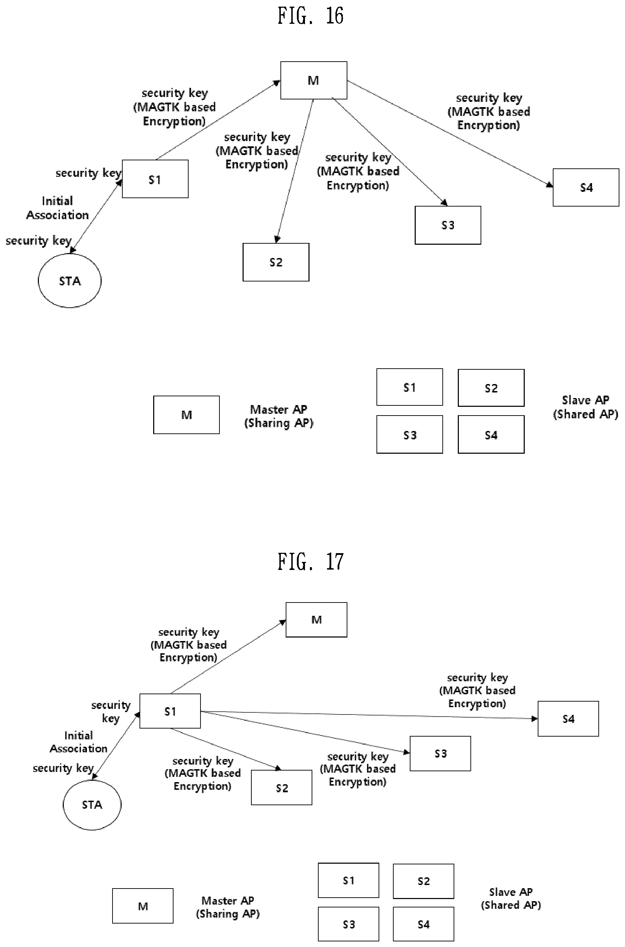

FIG. 16 is a diagram showing an example of a security key sharing operation according to the present disclosure.

In an example of FIG. 16, a STA may establish an initial association with slave AP 1 (S1) in a MAP. Accordingly, a security key (e.g., PTK/TK) may be generated in the same way between a STA and S1.

S1 may encrypt a security key (PTK/TK) based on a MAGTK (e.g., by using the TK of a MAGKTK). In addition, S1 may encrypt related information such as information of a corresponding STA, a cipher suite agreed between a STA and S1, the authentication and key management (AKM) of a STA, etc. based on a MAGTK (e.g., by using the TK of a MAGKTK). S1 may transmit an encrypted security key (PTK/TK) (and related information) to a master AP (M).

M may transmit an encrypted security key (PTK/TK) (and related information) received from S1 to other slave APs (S2, S3, S4) as it is. Alternatively, M may decrypt and store an encrypted security key (PTK/TK) (and related information) received from S1, encrypt it again based on a MAGTK (e.g., by using the TK of a MAGKTK) and transmit an encrypted security key (PTK/TK) (and related information) to other slave APs (S2, S3, S4). For example, M may transmit a MAGTK-based encrypted security key (PTK/TK) in a broadcast manner (i.e., to all slave APs including S1) or in a unicast/multicast manner to other slave APs (S2, S3, S4). Accordingly, all APs in a MAP may obtain and store a security key (PTK/TK) for a STA.

FIG. 17 is a diagram showing another example of a security key sharing operation according to the present disclosure.

In an example of FIG. 17, a STA may establish an initial association with slave AP 1 (S1) in a MAP. Accordingly, a security key (e.g., PTK/TK) may be generated in the same way between a STA and S1.

S1 may encrypt a security key (PTK/TK) based on a MAGTK (e.g., by using the TK of a MAGKTK). In addition, S1 may encrypt related information such as information of a corresponding STA, a cipher suite agreed between a STA and S1, the AKM of a STA, etc. based on a MAGTK (e.g., by using the TK of a MAGKTK). S1 may transmit an encrypted security key (PTK/TK) (and related information) to a master AP (M) and other slave APs (S2, S3, S4). S1 may transmit corresponding information to other APs in a MAP in a broadcast, multicast or unicast manner. Accordingly, all APs in a MAP may obtain and store a security key (PTK/TK) for a STA.

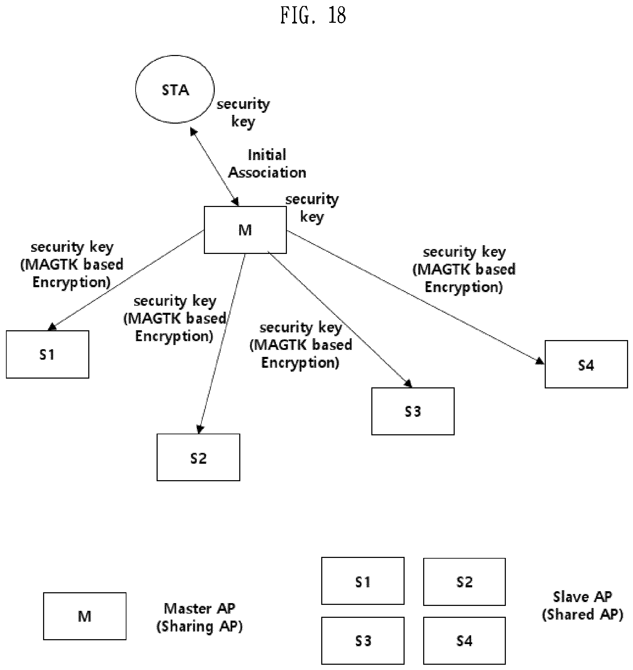

FIG. 18 is a diagram showing another example of a security key sharing operation according to the present disclosure.

In an example of FIG. 18, a STA may establish an initial association with a master AP (M) in a MAP. Accordingly, a security key (e.g., PTK/TK) may be generated in the same way between a STA and M.

M may encrypt a security key (PTK/TK) based on a MAGTK (e.g., by using the TK of a MAGKTK). In addition, M may encrypt related information such as information of a corresponding STA, a cipher suite agreed between a STA and M, the AKM of a STA, etc. based on a MAGTK (e.g., by using the TK of a MAGKTK). M may transmit an encrypted security key (PTK/TK) (and related information) to slave APs (S1, S2, S3, S4). M may transmit corresponding information to other APs in a MAP in a broadcast, multicast or unicast manner. Accordingly, all APs in a MAP may obtain and store a security key (PTK/TK) for a STA.

While a BSS transition method in the existing WLAN system is supported but new authentication and association procedures with a target AP are required, according to the present disclosure, a STA may mutually transmit and receive data even without an authentication procedure/an association procedure with other APs by sharing a security key generated by one AP for a STA with the remaining APs within the same AP set (e.g., MAP).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
generating a multi-access point group temporal key (MAGTK) by the first STA; and
transmitting a MAGTK encrypted based on a key shared between the first STA and at least one second STA to the at least one second STA,
wherein a security key for a third STA is encrypted based on the MAGTK and shared with the first STA and the at least one second STA.

2. The method of Claim 1, wherein:
the security key is encrypted by using a temporal key (TK) of the MAGTK, and is transmitted to the first STA from another second STA that establishes an initial association with the third STA.

3. The method of Claim 2, wherein:
the security key obtained by the first STA is encrypted by using the TK of the MAGTK, and is transmitted to the at least one second STA from the first STA.

4. The method of Claim 1, wherein:
the security key is encrypted by using a TK of the MAGTK, and is transmitted to the first STA and the at least one second STA from another second STA that establishes an initial association with the third STA.

5. The method of Claim 1, wherein:
the security key is encrypted by using a TK of the MAGTK, and is transmitted to the at least one second STA from the first STA that establishes an initial association with the third STA.

6. The method of Claim 1, wherein :
the security key is encrypted with information of the third STA, a cipher suite agreed between the first STA or another second STA that establishes an initial association with the third STA.

7. The method of Claim 1, wherein:
an element including the MAGTK is encrypted based on the key shared between the first STA and the at least one second STA, or
the MAGTK is encrypted based on the key shared between the first STA and the at least one second STA.

8. The method of Claim 1, wherein:
the key shared between the first STA and the at least one second STA is a key encryption key (KEK) or a pre-shared key (PSK).

9. The method of Claim 1, wherein:
an element including the MAGTK further includes at least one of key identification information, mobility domain (MD) identification information or multiple-access point (MAP) identification information, key length information, or a MAP group cipher suite.

10. The method of Claim 1, wherein:
at least based on a MAP-PTK, a medium access control (MAC) address of the third STA, or a MAC address of a MAP, the PTK is generated, and
the MAC address of the MAP is a MAC address of the first STA, or a MAC address common to the first STA and the at least one second STA.

11. The method of Claim 1, wherein:
at least based on a first group master key (GMK), a MAP group key expansion, or a MAC address of the first STA, the MAGTK is generated, and
the first GMK is identical to or different from a second GMK used to generate a group temporal key (GTK) by the first STRA.

12. The method of Claim 1, wherein:
the security key for the third STA is a pairwise temporal key (PTK) generated equally between a first STA or a second STA that establishes an initial association with the third STA, and the third STA or a TK of the PTK.

13. The method of Claim 1, wherein:
the first STA is a master access point (AP) or a sharing AP of a MAP,
the second STA is a slave AP or a shared of the MAP, and
the third STA is a non-AP STA.

14. The method of Claim 1, wherein:
the third STA is associated with the first STA, or is associated with one of the at least one second STA.

15. A first station (STA) device in a wireless local area network (WLAN) system, the device comprising:
at least one transceiver, and
at least one processor connected to the at least one transceiver,
wherein the at least one processor is configured to:
generate a multi-access point group temporal key (MAGTK); and
transmit, through the at least one transceiver, a MAGTK encrypted based on a key shared between the first STA and at least one second STA to the at least one second STA,
wherein a security key for a third STA is encrypted based on the MAGTK and shared with the first STA and the at least one second STA.

16. A method performed by a second station (STA) in a wireless local area network (WLAN) system, the method comprising:
obtaining a key shared between a first STA, and at least one second STA including the second STA; and
receiving, from the first STA, a multi-access point group temporal key (MAGTK) encrypted based on the key shared between the first STA and the at least one second STA,
wherein the MAGTK is generated by the first STA, and
wherein a security key for a third STA is encrypted based on the MAGTK and shared with the first STA and the at least one second STA.

17. A second station (STA) device in a wireless local area network (WLAN) system, the device comprising:
at least one transceiver, and
at least one processor connected to the at least one transceiver,
wherein the at least one processor is configured to:
obtain a key shared between a first STA, and at least one second STA including the second STA; and
receive, through the at least one transceiver, from the first STA, a multi-access point group temporal key (MAGTK) encrypted based on the key shared between the first STA and the at least one second STA,
wherein the MAGTK is generated by the first STA, and
wherein a security key for a third STA is encrypted based on the MAGTK and shared with the first STA and the at least one second STA.

18. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to Claim 1.

19. At least one non-transitory computer-readable medium storing at least one instruction, wherein:
the at least one instruction controls a device to perform a method according to Claim 1 in a wireless local area network (WLAN) system by being executed by at least one processor.
